# EUROPEAN PATENT APPLICATION

(11) **EP 4 176 958 A1**
(43) Date of publication of application: **10.05.2023**
(21) Application number: 21833904.2
(22) Date of filing: 29.06.2021
(51) Int. Cl.: B01D 46/00, B01D 46/42, B01D 39/14, F24F 8/10, F24F 13/28

(54) **COMPOSITE FILTER AND AIR PURIFIER INCLUDING SAME**

(30) Priority: 03.07.2020 KR 20200082122
(71) Applicant: Coway Co., Ltd., Gongju-si, Chungcheongnam-do 32508 (KR)
(72) Inventor: NAM, Yu Young, Seoul 08826 (KR); CHOI, Yoon Hyuck, Seoul 08826 (KR); KIM, Ki Soo, Seoul 08826 (KR); BAE, Jun Hyoung, Seoul 08826 (KR); KIM, Jhe Hong, Seoul 08826 (KR); BAEK, Ju Hyun, Seoul 08826 (KR); PARK, Chan Jung, Seoul 08826 (KR)
(74) Representative: Schneiders & Behrendt Bochum
(86) International application number: PCT/KR2021/008153
(87) International publication number: WO 2022/005154

(57) **Abstract**

A composite filter includes: a filter unit including a filter member for filtering air, the filter member having a plurality of filtering parts with side surfaces connected to each other so that the filtering parts are rotatable with respect to each other; at least one filter module arranged in parallel with at least one of the plurality of filtering parts; and a bracket supporting the filtering parts disposed adjacent to each other among the plurality of filtering parts and the filter module together so that the filtering parts disposed adjacent to each other are rotatable with respect to each other. The bracket includes: a folded portion that is selectively folded according to the relative rotation of the filtering parts disposed adjacent to each other; and a plurality of attachment portions respectively connected to the folded portion with the folded portion interposed therebetween, and respectively attached to the side surfaces of the filtering parts disposed adjacent to each other. The folded portion and the attachment portions are provided integrally with each other and are formed of a flexible material, and each of the attachment portions extends to the side surface of the filter module adjacent thereto to seal a gap between the filtering part and the filter module.

## Description

### TECHNICAL FIELD

The present disclosure relates to a composite filter and an air purifier including same.

### BACKGROUND

In general, an air purifier is a device for sucking polluted indoor air, and filtering out dust, odor particles, and the like contained in the air through a filter to purify the air into clean air. Such an air purifier may purify indoor air by sucking in and purifying the surrounding polluted air, and then discharging the purified clean air to the outside of the air purifier.

Meanwhile, the air purifier may include a filter for filtering out dust, odor particles, and the like contained in the air introduced into the air purifier. The filter may have various shapes depending on the type of the air purifier. For example, the filter may be provided in a cylindrical shape, a rectangular parallelepiped shape, or the like.

However, the filter having the above-described shape occupies a relatively large volume in the process of transporting, which incurs a high cost for transporting the filter. In addition, in recent years, the demand for a filter having a large area is increasing in order to purify air in a large space, and the volume occupied by the filter during transportation is increasing. Accordingly, filters having a reduced volume upon transportation of the filters have been developed.

U.S. Patent Application Publication No. 2018/0221805 "Air Purifier" of the present applicant and U.S. Patent Application Publication 2018/0304184 "Foldable Air Filter Unit" of Blueair AB disclose a foldable filter capable of reducing the volume upon transportation of the filter. However, according to the conventional folding filter, since a complicated hinge structure is required for folding, and the structure and manufacturing process of the foldable filter are complicated by using a complicated structure or a separate adhesive to combine the filter and a support (frame), there is a problem in that the manufacturing cost of the foldable filter increases.

In addition, in the case of a composite filter that combines a dust collection filter for filtering dust and a functional filter such as a deodorization filter, a sealing configuration for preventing air from leaking through a gap between the two stacked filters is required. When a hinge structure which is structurally difficult to seal is applied to the composite filter, a separate sealing member needs to be added, so the manufacturing process becomes complicated and the overall manufacturing cost is also increased, which is undesirable.

Accordingly, there is a need for a foldable filter with a simple structure capable of simplifying the manufacturing process and reducing manufacturing cost.

### (Prior Art Document)

(Patent Document 1) US Patent Application Publication No. 2018/0221805 (published on August 09, 2018)
(Patent Document 2) US Patent Application Publication No. 2018/0304184 (Published on October 25, 2018)

### DETAILED DESCRIPTION OF INVENTION

### TECHNICAL PROBLEMS

In view of the above, embodiments of the present disclosure provide a foldable composite filter which secures a large filtration area to filter a large amount of air and can reduce a volume thereof during transportation.

In addition, embodiments of the present disclosure provide a composite filter which can be used for a long time by improving the durability of the foldable composite filter while simplifying the structure of the foldable composite filter.

Further, embodiments of the present disclosure provide a composite filter capable of reducing the time and cost required for manufacturing the foldable composite filter by simplifying the structure of the filter.

### TECHNICAL SOLUTION

In accordance with an aspect of the present disclosure, there may be provided a composite filter including: a filter unit including a filter member for filtering air, the filter member having a plurality of filtering parts with side surfaces connected to each other so that the filtering parts are rotatable with respect to each other; at least one filter module arranged in parallel with at least one of the plurality of filtering parts; and a bracket supporting the filtering parts disposed adjacent to each other among the plurality of filtering parts and the filter module together so that the filtering parts disposed adjacent to each other are rotatable with respect to each other, wherein the bracket includes: a folded portion that is selectively folded according to the relative rotation of the filtering parts disposed adjacent to each other; and a plurality of attachment portions respectively connected to the folded portion with the folded portion interposed therebetween, and respectively attached to the side surfaces of the filtering parts disposed adjacent to each other, wherein the folded portion and the attachment portions are provided integrally with each other and are formed of a flexible material, and wherein each of the attachment portions extends to the side surface of the filter module adjacent thereto to seal a gap between the filtering part and the filter module.

Further, the plurality of filtering parts may include three or more filtering parts, and when each of the plurality of filtering parts is rotated with respect to the filtering part adjacent thereto at an angle less than a straight angle, the plurality of filtering parts may be arranged along a loop-like path.

Further, the number of the plurality of filtering parts may be an even number.

Further, the plurality of filtering parts may be rotatable with respect to each other so that at least two filtering parts adjacent to each other are arranged in parallel.

Further, the filter module may include: an air purification member for filtering air; and a module frame supporting an upper or lower side of the air purification member, and protrusions may be formed on at least one of both side surfaces of the air purification member.

Further, the bracket may have a concave portion corresponding to at least a portion of the protrusions and include an adhesive surface attached to the side surface of the air purification member.

Further, the filter unit may further include a filter frame having a support that supports an upper or lower side of the filtering parts, and the composite filter may further include a connection member attached to an upper side or lower side of the support and the module frame disposed adjacent to each other to seal a gap between the support and the module frame.

Further, the filter module may include a corrugated filter.

Further, there may be an air purifier including the composite filter described above and a blower for providing blowing force to allow outside air to pass through the composite filter.

Further, there may be provided a composite filter manufacturing method including: a laminated base material providing step of providing a laminated base material in which a filter unit base material and a filter module base material are stacked; a filter module cutting step of dividing and cutting the filter module base material into a plurality of filter modules by moving a cutter of the filter manufacturing apparatus along a virtual cutting line extending in a thickness direction of the laminated base material; a filter unit cutting step of cutting the filter unit base material to a depth smaller than a thickness of the filter unit base material by moving the cutter between the plurality of filter modules along the cutting line after the filter module cutting step; and a bracket attachment step of attaching the bracket to the side surfaces of the filtering part disposed adjacent to each other and the filter module, wherein the filter unit including the plurality of filtering parts and the plurality of supports is formed from the filter unit base material through the filter unit cutting step.

### EFFECT OF INVENTION

According to embodiments of the present disclosure, the cost of transporting the filter can be reduced by reducing the volume of the foldable composite filter in which, for example, a dust collection filter and a deodorization filter are combined.

Furthermore, the cost of manufacturing the filter can be reduced by simplifying the structure of the foldable composite filter.

### BRIEF DESCRIPTION OF THE DRAWINGS

FIG. 1 is a perspective view showing an air purifier according to a first embodiment of the present disclosure.
FIG. 2 is a cross-sectional view taken along II-II of FIG. 1.
FIG. 3 is a partial perspective view of a composite filter shown in FIG. 2.
FIG. 4 is a rear perspective view of FIG. 3.
FIG. 5 is an exploded perspective view of FIG. 3.
FIG. 6 is a perspective view of the composite filter in FIG. 2 from which a connection member is omitted.
FIG. 7 is a perspective view of the composite filter of FIG. 2.
FIG. 8 is an exploded perspective view of FIG. 7.
FIG. 9 is a perspective view when the composite filter of FIG. 7 is in a folded state.
FIG. 10 is a perspective view illustrating a composite filter according to a second embodiment of the present disclosure.
FIG. 11 is a conceptual diagram schematically illustrating a process for manufacturing a composite filter according to the present disclosure.
FIG. 12 is a flowchart schematically illustrating a method for manufacturing a composite filter according to the present disclosure.

### BEST MODE FOR CARRYING OUT THE INVENTION

Hereinafter, a preferred embodiment of the present disclosure for implementing the spirit of the present disclosure will be described in more detail with reference to the accompanying drawings.

However, in describing the present disclosure, detailed descriptions of known configurations or functions may be omitted to clarify the present disclosure.

When an element is referred to as being 'connected' to, 'supported' by, or 'flowed' into another element, it should be understood that the element may be directly connected to, supported by, or flowed into the other element, but that other elements may exist in the middle.

The terms used in the present disclosure are only used for describing specific embodiments, and are not intended to limit the present disclosure. Singular expressions include plural expressions unless the context clearly indicates otherwise.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements and/or combinations thereof disclosed in the specification, and are not intended to preclude the possibility that one or more other certain features, areas, integers, steps, actions, elements and/or combinations thereof may exist or may be added.

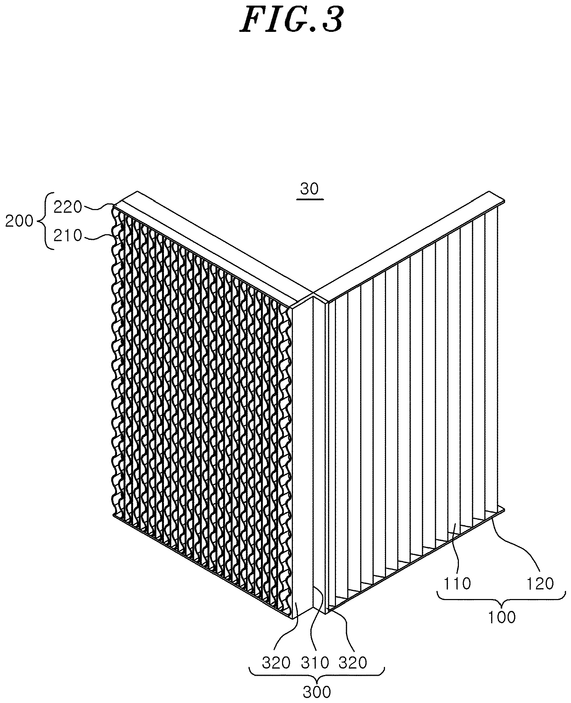

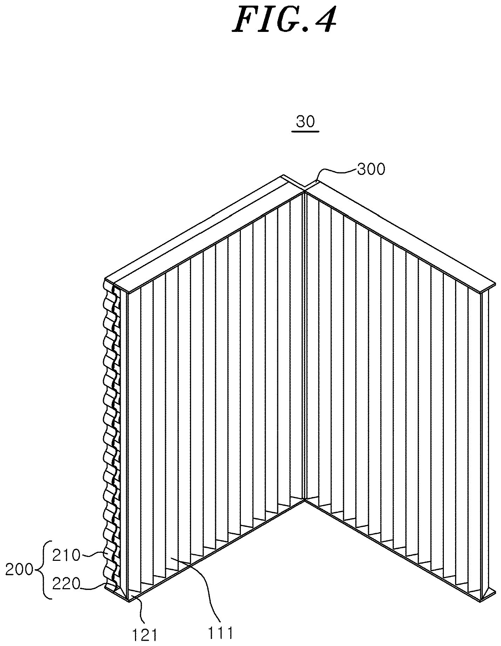

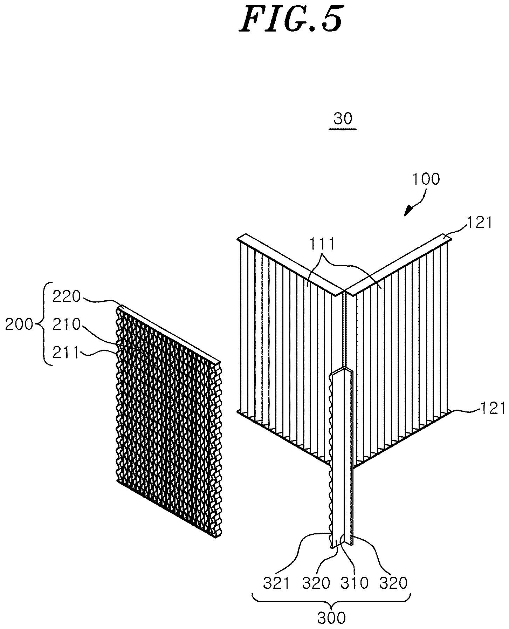

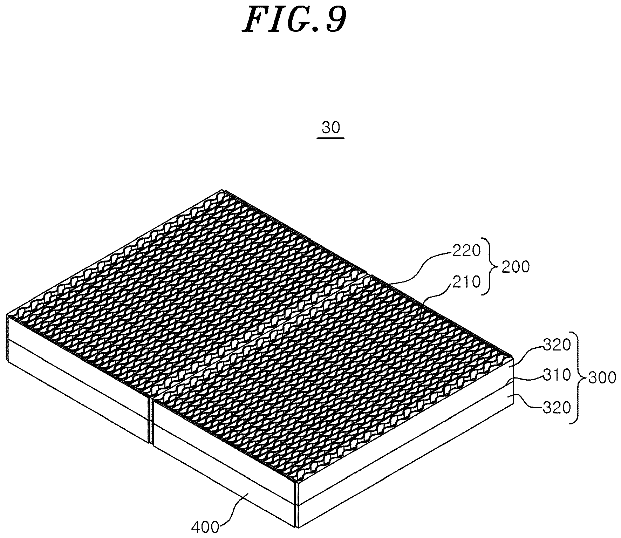

Furthermore, in the present disclosure, it is to be noted that expressions, such as the upper side and the lower side, are described based on the illustration of drawings, but may be modified if directions of corresponding objects are changed. Meanwhile, in the present specification, an up and down direction may be based on the up and down direction of FIGS. 3 to 10.

Hereinafter, a specific configuration of an air purifier 1 according to a first embodiment of the present disclosure will be described with reference to the drawings.

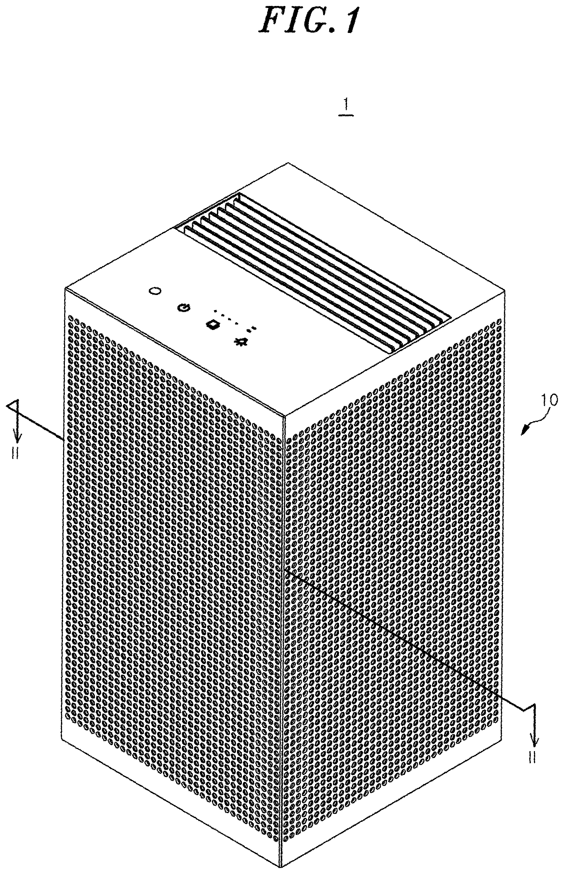

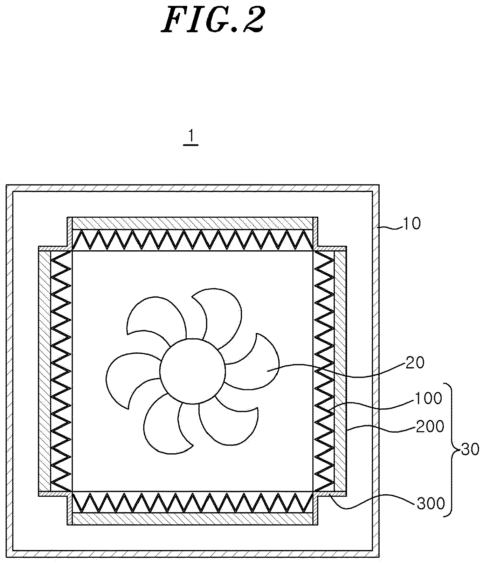

Referring to FIGS. 1 and 2, the air purifier 1 according to the first embodiment of the present disclosure can purify polluted air into clean air by filtering out dust, odor particles, and the like in the air introduced into the air purifier 1. In addition, the air purifier 1 can suck air outside the air purifier into the inside thereof and discharge clean air purified from the inside to the outside. The air purifier 1 may include a body 10, a blower 20, and a composite filter 30.

The body 10 may support the blower 20 and the composite filter 30, and provide a space in which the blower 20 and the composite filter 30 are accommodated. The body 10 may include a case surrounding the blower 20 and the composite filter 30.

The blower 20 may be driven to allow polluted air outside the air purifier 1 to be introduced into the inside of the air purifier 1. The blower 20 may provide blowing force for causing the introduced air to pass through the composite filter 30. In addition, the blower 20 may be driven to discharge the clean air inside the air purifier 1 to the outside. For example, the blower 20 may be disposed at a lower side in the body 10, and may be disposed inside the composite filter 30.

Referring to FIGS. 3 to 5, the composite filter 30 may filter the air introduced from the outside of the air purifier 1 into clean air. For example, it is possible to filter out dust, odor particles, and the like in the air. In addition, the composite filter 30 may be provided to be selectively foldable. For example, the composite filter 30 may be folded to minimize the volume of the composite filter 30 during delivery, and may be unfolded to perform the function of the composite filter 30 after delivery. The composite filter 30 may include a filter unit 100, a filtration module 200, a bracket 300, and a connection member 400.

The filter unit 100 is configured to allow air to pass therethrough, and can filter the air passing through the filter unit 100 into clean air. The filter unit 100 may be formed to extend in an up and down direction. In addition, one surface of the filter unit 100 through which air passes may be arranged in parallel with one surface of the filtration module 200. For example, the filter unit 100 may secondarily filter the air that has passed through the filtration module 200 to be primarily filtered thereby, but may primarily filter the air before passing through the filter module 200 depending on the flow direction of the air. The filter unit 100 may include a filter member 110 and a filter frame 120.

The filter member 110 is configured to catch dust in the air, and can filter the air passing through the filter member 110 into clean air. In addition, the filter member 110 may be supported by the filter frame 120. Further, the filter member 110 may include a filtering part 111.

The filtering part 111 may be provided to filter air. A plurality of pleats extending in an up and down direction may be formed in the filtering part 111. For example, the plurality of pleats of the filtering part 111 may be folded to be contracted in a direction perpendicular to the up and down direction or may be unfolded to be stretched in the direction perpendicular to the up and down direction. A portion of an edge of the filtering part 111 may be surrounded by a support 121 to be described later, and may be supported by the support 121. For example, upper and lower portions of the filtering part 111 may be supported by the support 121. In addition, the bracket 300 may be attached to a side portion of the filtering part 111.

Meanwhile, the filtering part 111 may include a plurality of filtering parts 111, and at least some of the plurality of filtering parts 111 may be disposed adjacent to each other. The plurality of filtering parts 111 may include two or more filtering parts 111, and more particularly, an even number of filtering parts 111 may be provided. Hereinafter, it is described that four filters 111 are provided, but this is only an example and any number of filtering parts 111 may be provided.

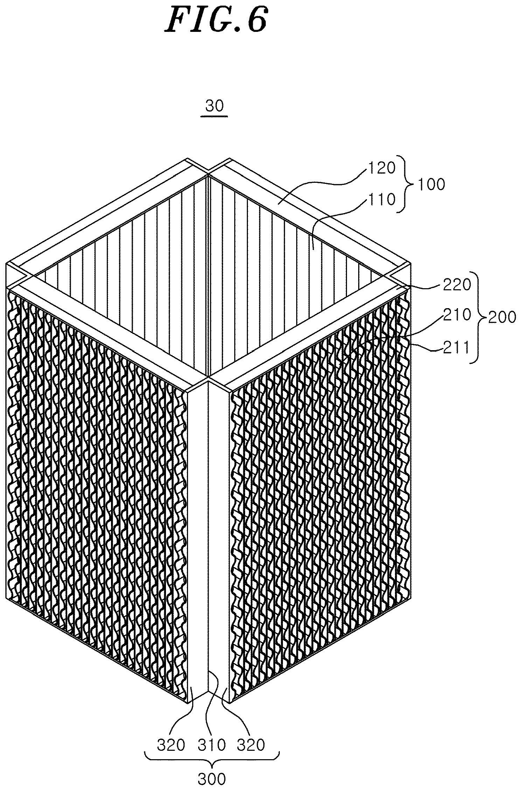

Referring to FIGS. 6 to 8, the plurality of filtering parts 111 may be integrally formed, and side surfaces thereof may be connected to each other so that the plurality of filtering parts 111 are rotatable with respect to each other. In other words, any one of the plurality of filtering parts 111 may rotate with respect to another filtering part 111 adjacent thereto. For example, each of the plurality of filtering parts 111 may be configured to rotate about an imaginary axis extending in the up and down direction to be folded on the adjacent filtering part 111.

When each of the plurality of filtering parts 111 is rotated with respect to each other to form an angle smaller than a straight angle with the adjacent filtering part 111, the plurality of filtering parts 111 may be arranged to form a loop-shaped path. In this case, the loop-shaped path may be defined as a path which starts from one point, passes through another point, and returns to the one point back. For example, the plurality of filtering parts 110 may include three filtering parts 111. As a detailed example, referring to FIG. 6, the plurality of filtering parts 111 may be rotated with respect to each other to form a predetermined angle (90° in case of four filtering parts) with the adjacent filtering part 111. In this case, the predetermined angle may be an angle at which the area of the inner space surrounded by the plurality of filtering parts 111 is maximized when viewed from above. At this time, as shown in FIG. 2, the plurality of filtering parts 111 viewed from above may form a rectangular loop. As such, when each of the plurality of filtering parts 111 forms an angle greater than 0° and less than 180° with the adjacent filtering part 111, it is defined as an unfolded state.

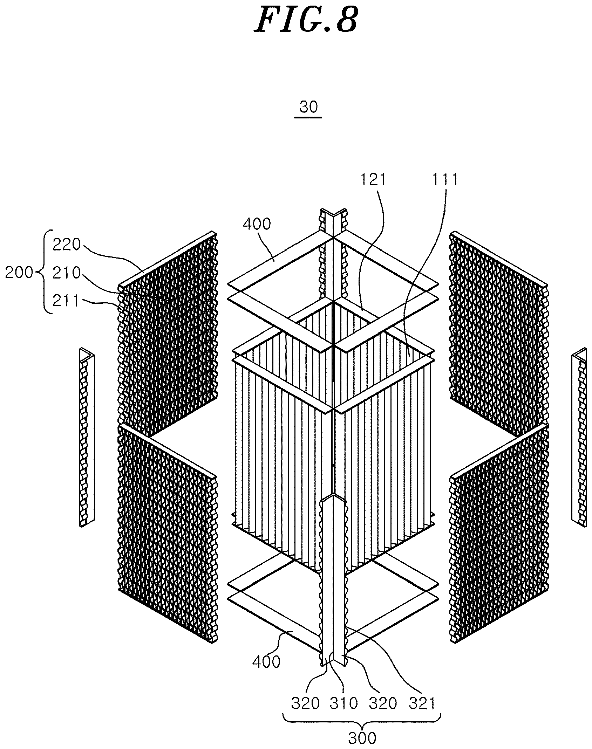

Referring to FIG. 8, the plurality of filtering parts 111 may rotate with respect to each other so that at least two filtering parts 111 adjacent to each other are arranged in parallel. As a detailed example, any one filtering part 111 among the plurality of filtering parts 111 may be folded with respect to another filtering part 111 connected to one side thereof by rotating with respect to the another filtering part 111. In this case, the angle between the one filtering part 111 and the another filtering part 111 connected to the one side is 0°. In addition, the one filtering part 111 may be unfolded with respect to further another filtering part 111 connected to the other side by rotating with respect to the further another filtering part 111. When the angle between each of the plurality of filtering parts 111 and the filtering part 111 adjacent thereto is 0° or 180°, it is defined as a folded state. In this case, the angle between the one filtering part 111 and the further another filtering part 111 connected to the other side is 180°.

As described above, when the plurality of filtering parts 111 are in the folded state, two filtering parts 111 adjacent to each other are arranged in parallel, so that the adjacent filtering parts 111 can be in close contact with each other. In addition, since the space between the plurality of filtering parts 111 is minimized, the volume of the filter member 110 is minimized.

The filter frame 120 may support the filter member 110. For example, the filter frame 120 is provided to surround an upper or lower side of the filter member 110, and may support the filter member 110 at the upper or lower side of the filter member 110. The filter frame 120 may include a plurality of supports 121.

The support 121 may support the filtering part 111. For example, the support 121 may support the filtering part 111 at the upper or lower side of the filtering part 111. In addition, the support 121 may include a plurality of supports 121, and the plurality of supports 121 may be integrally formed. The plurality of supports 121 may be connected at side surfaces thereof to be rotatable with respect to each other. In other words, any one of the plurality of supports 121 may rotate with respect to another support 121 adjacent thereto.

The filter module 200 may be provided to filter the air introduced into the body 10 from the outside. The filter module 200 may be configured as an additional dust collection filter to maximize dust collection performance, but may also be configured as a functional filter other than the purpose of dust collection. For example, the filter module 200 may be a deodorizing filter that removes odors, a smoke filter that removes smoke particles, and a sick house filter that removes substances which cause sick house syndrome. As a detailed example, the deodorizing filter may include a corrugated-type or activated carbon-type deodorizing filter. The filter module 200 may be disposed in parallel with one or more of the plurality of filtering parts 111 of the filter unit 100, and may be disposed outside the filter unit 100. In other words, the filter module 200 may be disposed to surround at least a portion of the filter unit 100. The filter module 200 may filter the air primarily before the air introduced from the outside is filtered by the filter unit 100, but when applied to an air purifier having a different flow direction, the filter module 200 may filter the air that has been filtered by the filter unit 100.

In addition, the filter module 200 may include a plurality of filter modules 200, and the plurality of filter modules 200 may be disposed side by side with the plurality of filtering units 111 and connected thereto, respectively. The bracket 300 and the connection member 400 may be attached to the filter module 200 and the filtering part 111 to connect the filter module 200 and the filtering part 111. For example, upper and lower surfaces of the filter module 200 may be connected to the filtering part 111 through the connection member 400. Further, side surfaces of the filter module 200 may be connected to the filtering part 111 through the bracket 300.

In the present specification and some of the drawings, the filter module 200 is expressed as being provided in plural corresponding to the number of the filtering parts 111, but this is only an example and one or more filter modules 200 may be provided independently of the number of the filtering parts 111. Accordingly, the filter module 200 may be provided in a smaller number than the number of the filtering parts 111 to surround the plurality of filtering parts 111, and as a detailed example, as shown in FIGS. 3 to 5, one filter module 200 may be provided.

Meanwhile, the filter module 200 may include an air purification member 210 and a module frame 220.

The air purification member 210 may be provided to filter air. The air purification member 210 may be partially supported by the module frame 220. For example, an upper or lower side of the air purification member 210 may be surrounded by the module frame 220 and may be supported by the module frame 220. In addition, the bracket 300 may be attached to a side surface of the air purification member 210.

Meanwhile, protrusions 211 may be formed on at least one of both side surfaces of the air purification member 210. For example, the air purification member 210 may include a plurality of portions extending in the up and down direction and having repeatedly curved shapes, and the protrusions 211 may be portions protruding outward among the repeatedly curved portions of the air purification member 210. The bracket 300 may be attached to the protrusions 211. Further, the protrusions 211 may be formed to correspond to concave portions 321 of the bracket 300 which will be described later.

The module frame 220 may support the air purification member 210. The module frame 220 may support the air purification member 210 at the upper or lower side of the air purification member 210.

The bracket 300 may support the filter unit 100 and the filter module 200 disposed adjacent to each other together. For example, the bracket 300 may support the filtering parts 111 disposed adjacent to each other, among the plurality of filtering parts 111, to be rotatable with respect to each other. In addition, the bracket 300 may support the support parts 121 adjacent to each other, among the plurality of supports 121, to be rotatable with respect to each other. The bracket 300 may connect the filter unit 100 and the filter module 200. For example, one side of the bracket 300 may be attached to the side surface of the filtering part 111 or the support 121, and the other side of the bracket 300 may be attached to the side surface of the filter module 200. Further, the bracket 300 may seal a gap between the filter unit 100 and the filter module 200. In addition, an adhesive or adhesive tape providing adhesive strength to be attached to the side surface of the filter unit 100 and the side surface of the filter module 200 may be provided on one surface of the bracket 300. The bracket 300 may be formed to extend in the up and down direction along the filtering part 111, and may be provided in plural.

Meanwhile, the bracket 300 may be configured to be folded or unfolded in response to the rotation of the filtering part 111 or the support 121. For example, when the filtering part 111 is in the unfolded state (that is, when the composite filter 30 is in a first state in which the composite filter 30 is mounted in the air purifier 1), the bracket 300 may be in the unfolded state to form an angle larger than 0° and smaller than 180°. In addition, when the filtering part 111 is in the folded state (that is, when the composite filter 30 is in a second state in which the composite filter 30 is removed from the air purifier 1 to be stored or transported), the bracket 300 disposed between some of the plurality of filtering parts 111 may be fully unfolded to form an angle of 180°, and the bracket 300 disposed between other some of the plurality of filtering parts 111 may be folded to form an angle of 0°. The bracket 300 may be made of a flexible material including at least one of a porous material such as a foam, a nonwoven fabric, a synthetic fiber, and a natural fiber, for example.

The bracket 300 may include a folded portion 310 and an attachment portion 320. The folded portion 310 and the attachment portion 320 may be integrally formed.

The folded portion 310 may be selectively folded according to the rotation of the adjacent filtering parts 111 with respect to each other. The folded portion 310 may be configured as a portion of the bracket 300 folded in response to the rotation of the filtering part 111. For example, when the filtering part 111 rotates with respect to the adjacent filtering part 111, an imaginary axis about which the filtering part 111 rotates may correspond to the folded portion 310. Further, the folded portion 310 may be disposed between the filtering part 111 and another filtering part 111. The folded portion 310 may be provided at the center of the bracket 300 to extend in the up and down direction.

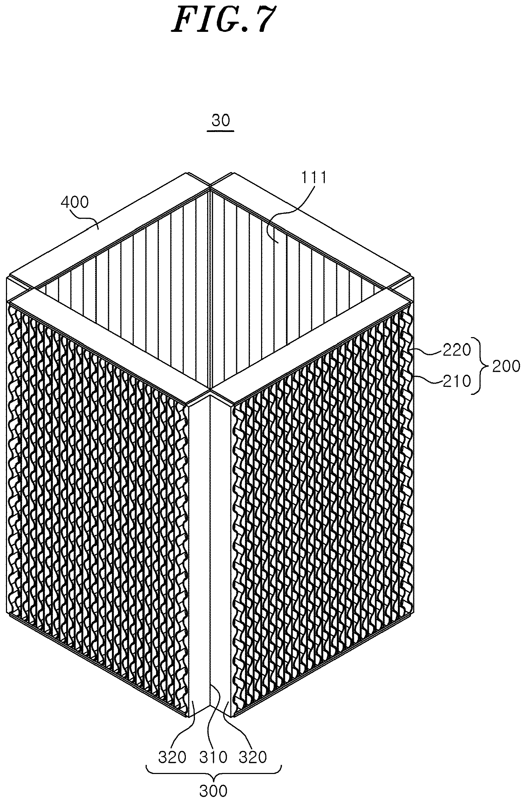

Referring back to FIG. 7, the attachment portion 320 may be attached to the filtering part 111 to connect the plurality of filtering parts 111. The attachment portion 320 may include a plurality of attachment portions 320, and the plurality of attachment portions 320 may be respectively connected to the folded portion 310 with the folded portion 310 interposed therebetween. Further, the plurality of attachment portions 320 may be respectively attached to the adjacent filtering parts 111 among the plurality of filtering parts 111. Meanwhile, the attachment portion 320 may be attached over the filter member 110 and the filter module 200, and may seal between the filter member 110 and the filter module 200. Specifically, the attachment portion 320 may be attached over the side surface of the filtering part 111 of the filter member 110 and the side surface of the air purification member 210 of the filter module 200. The attachment portion 320 may be attached to the support 121 to connect the plurality of filter frames 120. For example, the attachment portion 320 may extend from one edge of the filtering part 111 to the other edge of the air purification member 210 in order to cover the side surfaces of the filtering part 111 and the air purification member 210.

Meanwhile, one surface of the attachment portion 320 may be provided with an adhesive surface that is adhered to the side surface of the air purification member 210. The adhesive surface may be adhered to the side surface of the air purification member 210. Further, a concave portion 321 corresponding to at least a portion of the protrusions 211 may be formed in the attachment portion 320. For example, when the attachment portion 320 is attached to the side surface of the air purification member 210, the concave portion 311 may be attached to the protrusions 211.

The connection member 400 may be attached to the filter unit 100 and the filter module 200 to connect the filter unit 100 and the filter module 200. For example, a portion of the connection member 400 may be attached to the upper and lower surfaces of the filter unit 100, and another portion of the connection member 400 may be attached to the upper and lower surfaces of the filter module 200. In addition, an adhesive or adhesive tape providing adhesive strength to be attached to the upper and lower surfaces of the filter unit 100 and the upper and lower surfaces of the filter module 200 may be provided on one surface of the connection member 400. In addition, the connection member 400 may seal a gap between the filter unit 100 and the filter module 200. In other words, the connection member 400 may be attached to the support 121 and the module frame 220 so that the gap between the support 121 of the filter unit 100 and the module frame 220 of the filter module 200 is sealed. The connection member 400 may be a flexible material including at least one of a porous material such as a foam, a nonwoven fabric, a synthetic fiber, and a natural fiber, for example. However, as shown in FIG. 6, the connection member 400 may be omitted.

Hereinafter, the effect of the composite filter 30 having the above-described configuration will be described.

The composite filter 30 provides the effects to be described later, and above all, it is most meaningful that the composite filter 30 provides these effects economically with a simple configuration.

The composite filter 30 can be easily converted into the unfolded state or the folded state by the plurality of filter units 100 configured to be rotatable with respect to each other.

In addition, when the composite filter 30 is in the folded state, the adjacent filtering parts 111 are arranged to be in contact with each other, thereby minimizing the space between the plurality of filter members 110. When the composite filter 30 is in the folded state, the volume thereof can be minimized, which decreases the cost required for transportation. Further, after transportation, the composite filter 30 can be converted to the unfolded state to perform a filter function.

Meanwhile, the bracket 300 can connect the filtering part 111 and another filtering part 111, and has an effect of improving durability by reinforcing the connection portion. Further, the bracket 300 and the connection member 400 seal the gap between the filter unit 100 and the filter module 200 to prevent air from entering between the filter unit 100 and the filter module 200. To this end, it is possible to prevent the air that is not filtered by the filter module 200 from flowing directly into the filter unit 100, which increases the purification efficiency.

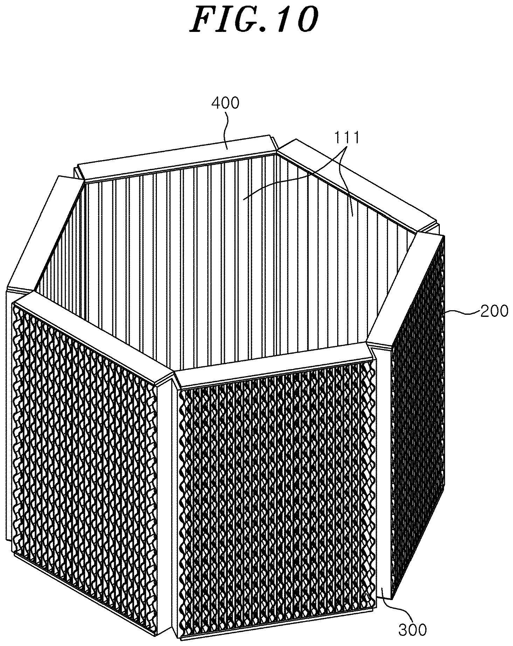

In addition to such configurations, according to a second embodiment of the present disclosure, six filter members 110 may be provided. Hereinafter, the second embodiment of the present disclosure will be described with further reference to FIG. 10. The description of the second embodiment description will be made mainly on the difference compared with the above-described embodiment, and the same descriptions and reference numerals are referred to the above-described embodiment.

In the second embodiment of the present disclosure, six filter members 110 may be provided. Each of the plurality of filter members 110 may rotate with respect to the adjacent filter member 110 to form an angle of 120° with the adjacent filter member 110 when in the unfolded state. In addition, the plurality of filter members 110 viewed from above may form a hexagonal loop. Each of the plurality of brackets 300 may rotate in response to the rotation of the plurality of filter members 110.

The filter members 111 can filter the air introduced from more various directions, and can improve the filtration efficiency.

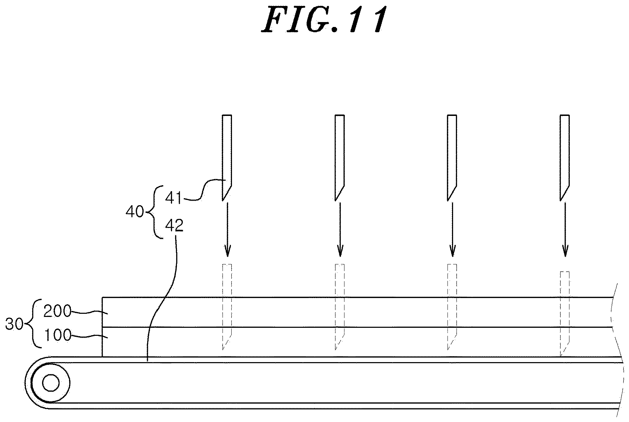

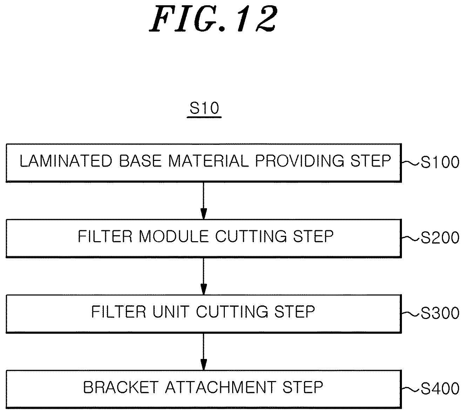

Hereinafter, a composite filter manufacturing method S10 for manufacturing the composite filter with four sides according to the first embodiment of the present disclosure will be described with reference to FIGS. 11 and 12.

In the composite filter manufacturing method S10, the composite filter 30 may be manufactured by processing a laminated base material in which a filter unit base material 100 and a filter module base material 200 are stacked. For example, the composite filter 30 may be manufactured using a filter manufacturing apparatus 40 including a cutter 41 and a conveyor 42. The composite filter manufacturing method S10 may include a laminated base material providing step S100, a filter module cutting step S200, a filter unit cutting step S300, and a bracket attachment step S400.

In the laminated base material providing step S100, the laminated base material may be provided by stacking a provided filter module base material 200 on a provided filter unit base material 100. Here, the filter unit base material 100 means the filter unit 100 before being cut, and the filter module base material 200 means the filter module 200 before being cut. The laminated base material may be transferred to the conveyor 42, and may be transferred in one direction through the conveyor 42.

In the filter module cutting step S200, the filter module base material 200 located at an upper side of the laminated base material moving on the conveyor 42 may be cut. For example, in the filter module cutting step S200, a plurality of cutters 41 may cut the filter module base material 200 along a virtual cutting line extending in a thickness direction of the filter module base material 200. In this case, the filter module base material 200 may be divided into a plurality of filter modules 200.

In the filter unit cutting step S300, a part of the filter unit base material 100 located at a lower side of the laminated base material moving on the conveyor 42 may be cut. For example, in the filter unit cutting step S300, the plurality of cutters 41 cut the filter module base material 200 and then continuously move between the plurality of filter modules 200 along the cutting line to cut the filter unit base material 100 to a depth smaller than the thickness thereof. The depth at which the filter unit base material 100 is cut may be adjusted appropriately according to pleats formed in the filter unit base material 100 so that the filter unit base material 100 is not completely divided to form a plurality of filter members 110 connected to each other. In the case of manufacturing the composite filter with four sides according to the first embodiment of the present disclosure, as shown in FIG. 11, when cutting a point corresponding to a multiple of 4, the cutting depth is adjusted so that the filter unit base material 100 is completely cut to split.

In the bracket attachment step S400, the filter unit 100 and the filter module 200 manufactured in the filter module cutting step S200 and the filter unit cutting step S300 may be connected through the bracket 300. In other words, in the bracket attachment step S400, the filter unit 100 and the filter module 200 are connected by attaching the bracket 300 to the side surfaces of the filter unit 100 and the filter module 200 disposed adjacent to each other. The bracket attachment step S400 may be performed after the filter module cutting step S200 and the filter unit cutting step S300.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A composite filter comprising:
a filter unit including a filter member for filtering air, the filter member having a plurality of filtering parts with side surfaces connected to each other so that the filtering parts are rotatable with respect to each other;
at least one filter module arranged in parallel with at least one of the plurality of filtering parts; and
a bracket supporting the filtering parts disposed adjacent to each other among the plurality of filtering parts and the filter module together so that the filtering parts disposed adjacent to each other are rotatable with respect to each other,
wherein the bracket includes:
a folded portion that is selectively folded according to the relative rotation of the filtering parts disposed adjacent to each other; and
a plurality of attachment portions respectively connected to the folded portion with the folded portion interposed therebetween, and respectively attached to the side surfaces of the filtering parts disposed adjacent to each other,
wherein the folded portion and the attachment portions are provided integrally with each other and are formed of a flexible material, and
wherein each of the attachment portions extends to the side surface of the filter module adjacent thereto to seal a gap between the filtering part and the filter module.

2. The composite filter of claim 1, wherein the plurality of filtering parts include three or more filtering parts, and when each of the plurality of filtering parts is rotated with respect to the filtering part adjacent thereto at an angle less than a straight angle, the plurality of filtering parts are arranged along a loop-like path.

3. The composite filter of claim 2, wherein the number of the plurality of filtering parts is an even number.

4. The composite filter of claim 1, wherein the plurality of filtering parts are rotatable with respect to each other so that at least two filtering parts adjacent to each other are arranged in parallel.

5. The composite filter of claim 1, wherein the filter module includes:
an air purification member for filtering air; and
a module frame supporting an upper or lower side of the air purification member, and
wherein protrusions are formed on at least one of both side surfaces of the air purification member.

6. The composite filter of claim 5, wherein the bracket has a concave portion corresponding to at least a portion of the protrusions and includes an adhesive surface attached to the side surface of the air purification member.

7. The composite filter of claim 5, wherein the filter unit further includes a filter frame having a support that supports an upper or lower side of the filtering parts, and
wherein the composite filter further includes a connection member attached to an upper side or lower side of the support and the module frame disposed adjacent to each other to seal a gap between the support and the module frame.

8. The composite filter of claim 1, wherein the filter module comprises a corrugated filter.

9. An air purifier comprising:
the composite filter of any one of claims 1 to 8; and
a blower for providing blowing force to allow outside air to pass through the composite filter.

10. A composite filter manufacturing method for manufacturing the composite filter of any one of claims 1 to 8 using a filter manufacturing apparatus, the method comprising:
a laminated base material providing step of providing a laminated base material in which a filter unit base material and a filter module base material are stacked;
a filter module cutting step of dividing and cutting the filter module base material into a plurality of filter modules by moving a cutter of the filter manufacturing apparatus along a virtual cutting line extending in a thickness direction of the laminated base material;
a filter unit cutting step of cutting the filter unit base material to a depth smaller than a thickness of the filter unit base material by moving the cutter between the plurality of filter modules along the cutting line after the filter module cutting step; and
a bracket attachment step of attaching the bracket to the side surfaces of the filtering part disposed adjacent to each other and the filter module,
wherein the filter unit including the plurality of filtering parts and the plurality of supports is formed from the filter unit base material through the filter unit cutting step.
